Europäisches Patentamt

European Patent Office

Office européen des brevets

(11) Publication number: **0 203 737 B1**

## EUROPEAN PATENT SPECIFICATION

(45) Date of publication of patent specification: **23.09.92**

(51) Int. Cl.⁵: **C08J 3/24**, C08J 7/04, B32B 27/28, C09J 7/02

(21) Application number: **86303346.0**

(22) Date of filing: **01.05.86**

(54) Radiation grafting of organopolysiloxanes.

(30) Priority: **02.05.85 US 730691**

(43) Date of publication of application:
**03.12.86 Bulletin 86/49**

(45) Publication of the grant of the patent:
**23.09.92 Bulletin 92/39**

(84) Designated Contracting States:
**AT BE CH DE FR GB IT LI NL SE**

(56) References cited:
**EP-B- 0 006 705
GB-A- 912 259
US-A- 2 904 481**

(73) Proprietor: **RAYCHEM CORPORATION (a Delaware corporation)
300 Constitution Drive
Menlo Park, California 94025(US)**

(72) Inventor: **Dubrow, Robert S.
334 Roble Avenue
Redwood City California 94061(US)**
Inventor: **Uken, William David
4159 Glenwood Street
Fremont California 94538(US)**
Inventor: **Dittmer, Catherine A.
1920 Latham Street, 11
Mountain View California 94040(US)**

(74) Representative: **Auckland, Jacqueline et al
Raychem Limited Intellectual Property Law
Department Faraday Road Dorcan
Swindon, Wiltshire SN3 5HH(GB)**

EP 0 203 737 B1

## Description

Field of the Invention

This invention relates to the radiation grafting of organopolysiloxane materials to polymeric supports wherein the grafted organopolysiloxane material is a mixture of crosslinked and uncrosslinked organopolysiloxane.

Background of the Invention

Organopolysiloxane materials having a cone penetration between 100 and 350 ($10^{-1}$mm) (ASTM No. D217-68) and an ultimate elongation of at least 100% (ASTM No. D638-80) contain a mixture of crosslinked and uncrosslinked organopolysiloxane. The uncrosslinked organopolysiloxane oil may constitute from 10% to 90% by weight of the mixture but may be between 25 and 75% by weight and more usually may be between 30% to 70% by weight. These materials are useful as sealants and for forming protective covers over various substrates to protect the substrates from environmental conditions, moisture, or other undesirable elements. The various properties of these materials such as the elasticity, conformability, self-healing properties, elongation and other aspects make these materials very attractive as sealants for various substrates. In particular these materials are attractive because they can be repeatedly removed from and replaced on the various substrates without substantial loss of the adhesion to the substrate due to the surface tackiness of the organopolysiloxane material.

These materials generally have a very high surface tackiness. However, due to the uncrosslinked oil content of the mixture it is difficult to adhere the mixture preferentially to one surface, such as a support member, as opposed to another surface, such as a substrate, so that the organopolysiloxane material may be applied to a substrate and then removed from the substrate by adhesion to the support member.

In order to be useful in many applications, these organopolysiloxane materials must be used in combination with a support or container by which the material may be handled. These types of materials have been used in various containers and cast in a flexible matrix and used with release papers as illustrated by copending European application publication no. 0108518 and copending European Publication no. 0189240; which are incorporated herein by reference. In these applications the organopolysiloxane material is generally held to the container or support by the mechanical configuration thereof or in the case of release papers the material is placed between two substrates without the intent of removal and reuse.

It is desirable to have these organopolysiloxane materials adhere to a support material, such as a polymeric sheet or tape, with a force greater than the adhesive force with which it bonds to a substrate through surface tackiness or other mechanism. In general it is desirable to have these organopolysiloxane materials bonded to a support with a bond strength greater than the cohesive strength of the organopolysiloxane material itself.

Apparently due to the uncrosslinked oil content of these organopolysiloxane material attempts to bond the material to a support have met with limited success. In copending European Publication no. 0147130, it is disclosed that neoprene contact adhesive will bond a support to urethane materials having similar properties and characteristics including an uncrosslinked oil content. It has been found that contact adhesives will not bond the organopolysiloxane materials of this invention to supports. In the copending European Publication 0194872 corresponding to US serial no. 711,119 filed 12th March 1985, it is disclosed that elastomeric sealants having properties and characteristics similar to the organopolysiloxane materials of this invention will bond to certain porous polymeric support materials.

It is believed that due to the uncrosslinked organopolysiloxane oil content present in the materials of this invention, it is completely unpredictable and unforeseen how these materials can be bonded to a support with a bond strength greater than the cohesive strength of the organopolysiloxane material itself.

Radiation grafting of various materials such as hard rubber is known in the art as illustrated by U.S. patents 3,179,546 to Fischer, 3,669,796 to Hall et al. and 3,939,049 to Ratner.

It is an object of this invention to bond such organopolysiloxane mixtures to polymeric support to thereby render the combination suitable for use as a tape or other protective article.

Description of the Invention

In one aspect this invention provides a method of forming an organopolysiloxane material bonded to a polymeric support comprising
placing an organopolysiloxane fluid on a polymeric support; and

irradiating said fluid and support with ultraviolet light or high energy radiation to crosslink a portion of said fluid to produce a material which is bonded to said support and which comprises a mixture of crosslinked organopolysiloxane and from 10% to 90%, preferably from 25% to 75%, by weight uncrosslinked organopolysiloxane oil and has a cone penetration between 100 and 350 ($10^{-1}$mm) and an ultimate elongation of at least 100%.

In another aspect this invention provides a method of bonding an organopolysiloxane material to a polymeric support comprising

contacting a polymeric support with material comprising a mixture of crosslinked organopolysiloxane and from 10% to 90%, preferably from 25% to 75%, by weight uncrosslinked organopolysiloxane oil and having a cone penetration between 100 and 350 ($10^{-1}$mm) and an ultimate elongation of at least 100%; and

irradiating said polymeric support and organopolysiloxane material with ultraviolet light or high energy radiation sufficient to effect a bond of the organopolysiloxane material to the polymeric support but without substantially changing the cone penetration and ultimate elongation values of the organopolysiloxane material.

In another aspect this invention provides an article comprising a polymeric support and grafted thereon a mixture of a crosslinked organopolysiloxane and from 10 to 90%, preferably from 25% to 75%, by weight uncrosslinked organopolysiloxane oil which mixture has a cone penetration of 100 to 350 ($10^{-1}$mm) and an ultimate elongation of at least 100%.

The organopolysiloxane material useful in this invention comprises any conventional organopolysiloxane which is unsubstituted or substituted with various functional groups. It can be a polydimethylsiloxane such as a trimethyl terminated polydimethylsiloxane or may have various vinyl methyl or other functional groups on the terminal groups or on the backbone groups. In particular, we prefer polydimethylsiloxane, up to 5% of the polydimethylsiloxane being terminated with divinylmethylsiloxane groups. The only requirement is that the organopolysiloxane can be crosslinked to provide a cone penetration in the range of 100 to 350 ($10^{-1}$mm) and an ultimate elongation of at least 100%.

The polymeric support can be any polymeric sheet or film which can function as a container for the organopolysiloxane material or as a flexible support for the material. Examples of such polymeric support include polyethylene, polystyrene, polypropylene, ethylene vinylacetate, polyvinylchloride, tetrafluoroethylene, polycarbonate, polysulfone, and the like. The polymeric support material should be selected to be compatible with the type and intensity of irradiation to be used because some polymeric materials tend to degrade under certain kinds of irradiation while others are resistant to some irradiation and may prevent the desired bonding at that irradiation type and level.

The irradiation according to this invention may be high intensity ultraviolet light when the organopolysiloxane fluid or material is present as a very thick layer on the polymeric support. For anything other than very thin layers of the organopolysiloxane fluid or material on the polymeric support it will be necessary to use high energy radiation such as electron beam, colbalt 60, x-ray, and the like.

As indicated above the irradiation should be sufficient to effect the bond of the organopolysiloxane material to the polymeric support without substantially changing the cone penetration and ultimate elongation values of the organopolysiloxane material. The cone penetration and ultimate elongation values will usually change to some extent, however they should not be allowed to change so substantially that they are changed to a different range of properties. Any change can be compensated for on a manufacturing basis by starting with a material which will provide the desired range of values at the conclusion of the irradiation to effect said bond.

In some combinations it will be helpful to include a prorad material or accelerator such as triallycyanurate in the fluid or in the polymeric support.

The invention can be illustrated by the following examples.

Example 1

The polydimethylsiloxane fluid used was Dow 200 (Trade Mark) having viscosity of $10^{-2}$m$^2$•S$^{-1}$ (10,000 centistokes) from Dow Corning. The fluid was poured onto the various backing materials, vacuumed to remove air, and irradiated to a dose of 11•$10^4$ Gray (11 Mrads) with a 3.5 mev electron beam to produce a crosslinked organopolysiloxane on the support 2 mm in thickness and having a cone penetration of about 22 ($10^{-1}$mm) and an ultimate elongation of about 400%. The samples were then submersed in a solvent for twenty-four hours. The following solvents were used with the respective substrates:

Acetone:        1, 2-polybutadiene, polycarbonate, silicone rubber, polyaryletherketone, polyurethane.

Chloroform:      Nylon 11 (Trade Mark).

3

Isopropanol: Hytrel (Trade Mark), polysulfone, PVC, polystyrene.

Methylene Chloride: EVA, high density polyethylene, polyvinylidenefluoride, Mylar (Trade Mark), polyDMS gel, polypropylene, tetrafluoroethylene, polyethylenetetrafluoroethylene.

Table 1 shows which bonds failed, which were weak bonds and which bonds were strong enough to induce cohesive failure of the crosslinked polydimethylsiloxane when it is peeled from the substrate.

Table 1

| RADIATION GRAFTED BOND STRENGTHS BETWEEN CROSSLINKED POLYDIMETHYLSILOXANE AND VARIOUS POLYMERIC MATERIALS | | | |
|---|---|---|---|
| POLYMERIC MATERIAL | BOND STRENGTH | | |
| | Cohesive Failure | Some Bonding After Solvent | Separated in Solvent |
| EVA | X | | |
| High Density Polyethylene | X | | |
| HDPE w/prorad | X | | |
| Polyvinylidenefluoride | X | | |
| Polyvinylidenefluoride w/prorad | X | | |
| Mylar (Trade Mark) | | | X** |
| Nylon II (Trade Mark) | | X | |
| Nylon II w/prorad | | X | |
| 1,2-Polybutadiene | X | | |
| Polycarbonate | X | | |
| PolyDMS Gel | X | | |
| Polypropylene | X | | |
| Polystyrene | X | | |
| Polysulfone | X | | |
| PVC | | X | |
| Silicone Rubber | X | | |
| Polyaryletherketone | | | X** |
| Tetrafluoroethylene | | | X* |
| Tetrafluoroethylene w/glassfibers | X | | |
| Polyethylenetetrafluoroethylene | X | | |
| Polyethylenetetrafluoroethylene w/prorad | X | | |
| Polyurethane | X | | |

*The tetrafluoroethylene degraded under radiation.
**Radiation resistant materials which interferred with graft bonding.

Example 2

Samples were taken of Nylon 11, Polyethylene, and Mylar support materials were coated with a 0.5 mm layer of Dow 200 fluid from Example 1.

Two sets of samples were made with each material. One set of samples consisted of the support, a polysiloxane layer, and another support layer; the other set of samples consisted of a support and a poysiloxane layer.

The six samples were then irradiated to a dose of $9.18^4$ Gray (9 megarads) on a 3.5 mev electron beam. After irradiation another piece of the same support material was placed on the samples having only one initial support material. Peel tests were then done to determine the failure mode of the bond formed, the results of which are listed in Table 2.

# EP 0 203 737 B1

Table 2

| | Sample | Material | Adhesive Failure | Cohesive Failure |
|---|---|---|---|---|
| | 1 | Nylon II | | X |
| | 2 | Nylon II | X | |
| | 1 | Polyethylene | | X |
| | 2 | Polyethylene | X | |
| | 1 | Mylar | X | |
| | 2 | Mylar | X | |

Each Sample 1: Irradiated with polysiloxane in between two support material layers.
Each Sample 2: Irradiated with polysiloxane on one support material layer with second layer placed on after irradiation.

## Claims

1. A method of forming an organopolysiloxane material bonded to a polymeric support comprising

   placing an organopolysiloxane fluid on a polymeric support; and

   irradiating said fluid and support with ultraviolet light or high energy radiation to crosslink a portion of said fluid to produce a material which is bonded to said support and which comprises a mixture of crosslinked organopolysiloxane and from 10% to 90% by weight uncrosslinked organopolysiloxane oil and has a cone penetration between 100 and 350 ($10^{-1}$mm) and an ultimate elongation of at least 100%.

2. A method according to claim 1 wherein the uncrosslinked organopolysiloxane oil is present between 25% and 75%.

3. A method according to claim 1 or 2, wherein the organopolysiloxane comprises a polydimethylsiloxane and up to 5% of the polydimethylsiloxane is terminated with divinylmethylsiloxane groups.

4. A method according to any preceding claim, wherein the irradiation is by ultraviolet light or an electron beam.

5. A method of bonding an organopolysiloxane material to a polymeric support comprising

   contacting a polymeric support with material comprising a mixture of crosslinked organopolysiloxane and from 10% to 90% by weight uncrosslinked organopolysiloxane oil and having a cone penetration between 100 and 350 ($10^{-1}$mm) and an ultimate elongation of at least 100%; and irradiating said polymeric support and organopolysiloxane material with ultraviolet light or high energy radiation sufficient to effect a bond of the organopolysiloxane material to the polymeric support but without substantially changing the cone penetration and ultimate elongation values of the organopolysiloxane material.

6. A method according to claim 5 wherein the uncrosslinked organopolysiloxane oil is present between 25% and 75%.

7. A method according to claim 5 or 6 wherein the organopolysiloxane comprises a polydimethylsiloxane and up to 5% of the polydimethylsiloxane is terminated with divinylmethylsiloxane groups.

8. A method according to claim 5, 6 or 7 wherein the irradiation is by ultraviolet light or an electron beam.

9. An article comprising a polymeric support and grafted thereon a mixture of a crosslinked organopolysiloxane and from 10 to 90% by weight uncrosslinked organopolysiloxane oil which mixture has a cone penetration of 100 to 350 ($10^{-1}$mm) and an ultimate elongation of at least 100%.

5

EP 0 203 737 B1

**10.** An article according to claim 9 wherein the uncrosslinked organopolysiloxane oil is present between 25% and 75%.

**11.** An article according to claim 9 or 10 wherein the organopolysiloxane material comprises a polydimethysiloxane and up to 5% of the polydimethylsiloxane is terminated with divinylmethylsiloxane groups.

**12.** An article according to any one of claims 9 to 11 wherein the irradiation is by ultraviolet light or an electron beam.

**13.** An article according to any one of claims 9 to 12 wherein the article is in the form of a tape.

**Patentansprüche**

**1.** Verfahren zur Bildung eines auf einen Polymerträger fest aufgebrachten Organopolysiloxanmaterials, mit den Schritten:

Aufbringen eines flüssigen Organopolysiloxans auf einen Polymerträger; und

Bestrahlen der Flüssigkeit und des Trägers mit UV-Licht oder einer energiereichen Strahlung zum Vernetzen eines Teils der Flüssigkeit zur Herstellung eines Materials, das fest auf dem Träger aufgebracht ist und ein Gemisch aus vernetztem Organopolysiloxan und zwischen 10 und 90 Gew.% unvernetztem Organopolysiloxanöl enthält, wobei das Material einen Kegeldruckwert zwischen 100 und 350 ($10^{-1}$mm) und eine Bruchdehnung von mindestens 100% aufweist.

**2.** Verfahren nach Anspruch 1, bei welchem das unvernetzte Organopolysiloxanöl in einer Menge von 25% bis 75% vorhanden ist.

**3.** Verfahren nach Anspruch 1 oder 2, bei welchem das Organopolysiloxan ein Polydimethylsiloxan enthält und bei bis zu 5% des Polydimethylsiloxans endständige Divinylmethylsiloxangruppen vorhanden sind.

**4.** Verfahren nach einem der vorhergehenden Ansprüche, bei welchem die Bestrahlung mit UV-Licht oder einem Elektronenstrahl erfolgt.

**5.** Verfahren zum Verbinden eines Organopolysiloxanmaterials mit einem Polymerträger, mit folgenden Schritten:
Kontaktieren eines Polymerträgers mit einem Material, das ein Gemisch aus vernetztem Organopolysiloxan und 10 bis 90 Gew.% unvernetztes Organopolysiloxanöl enthält, wobei das Material einen Kegeldruckwert zwischen 100 und 350 ($10^{-1}$mm) und eine Bruchdehnung von mindestens 100% aufweist; und Bestrahlen des Polymerträgers und des Organopolysiloxanmaterials mit UV-Licht oder einer energiereichen Strahlung, die ausreicht, um eine feste Verbindung zwischen dem Organopolysiloxanmaterial und dem Polymerträger herzustellen, ohne jedoch den Kegeldruckwert und den Bruchdehnungswert des Organopolysiloxans wesentlich zu verändern.

**6.** Verfahren nach Anspruch 5, bei welchem das unvernetzte Organopolysiloxanöl in einer Menge von 25% bis 75% vorhanden ist.

**7.** Verfahren nach Anspruch 5 oder 6, bei welchem das Organopolysiloxan ein Polydimethylsiloxan enthält und bei bis zu 5% des Polydimethylsiloxans endständige Divinylmethylsiloxangruppen vorhanden sind.

**8.** Verfahren nach Anspruch 5, 6 oder 7, bei welchem die Bestrahlung mit UV-Licht oder einem Elektronenstrahl erfolgt.

**9.** Gegenstand, der einen Polymerträger und darauf gepfropft ein Gemisch aus vernetztem Organopolysiloxan und zwischen 10 und 90 Gew.% unvernetztem Organopolysiloxanöl enthält, wobei das Gemisch einen Kegeldruckwert zwischen 100 und 350 ($10^{-1}$mm) und eine Bruchdehnung von mindestens 100% aufweist.

6

**10.** Gegenstand nach Anspruch 9, bei welchem das unvernetzte Organopolysiloxanöl in einer Menge von 25% bis 75% vorliegt.

**11.** Gegenstand nach Anspruch 9 oder 10, bei welchem das Organopolysiloxanmaterial ein Polydimethylsiloxan enthält und bei bis zu 5% des Polydimethylsiloxans endständige Divinylmethylsiloxangruppen vorhanden sind.

**12.** Gegenstand nach einem der Ansprüche 9 bis 11, bei welchem die Bestrahlung mit UV-Licht oder einem Elektronenstrahl erfolgt.

**13.** Gegenstand nach einem der Ansprüche 9 bis 12, wobei der Gegenstand band- bzw. streifenförmig ist.

**Revendications**

**1.** Procédé d'obtention d'un organopolysiloxane lié à un support polymérique, consistant
à placer un fluide consistant en un organopolysiloxane sur un support polymérique ; et
à irradier ledit fluide et ledit support avec de la lumière ultraviolette ou un rayonnement de haute énergie pour provoquer la réticulation d'une portion dudit fluide pour produire une substance qui est liée audit support et qui consiste en un mélange d'organopolysiloxane réticulé et de 10% à 90% en poids d'huile d'organopolysiloxane non réticulé, et qui possède une valeur de pénétration de cône de 100 à 350 ($10^{-1}$ mm) et un allongement à la rupture d'au moins 100%.

**2.** Procédé suivant la revendication 1, dans lequel l'huile d'organopolysiloxane non réticulé est présente en une quantité de 25% à 75%.

**3.** Procédé suivant la revendication 1 ou 2, dans lequel l'organopolysiloxane consiste en un polydiméthylsiloxane, une quantité allant jusqu'à 5% du polydiméthylsiloxane étant terminée par des groupes divinylméthylsiloxane.

**4.** Procédé suivant l'une quelconque des revendications précédentes, dans lequel l'irradiation est effectuée au moyen de lumière ultraviolette ou d'un faisceau d'électrons.

**5.** Procédé de liaison d'un organopolysiloxane à un support polymérique, consistant
à mettre en contact un support polymérique avec une matière consistant en un mélange d'un organopolysiloxane réticulé et de 10% à 90% en poids d'huile d'organopolysiloxane non réticulé et ayant une valeur de pénétration de cône de 100 à 350 ($10^{-1}$ mm) et un allongement à la rupture d'au moins 100% ; et
à irradier ledit support polymérique et ledit organopolysiloxane avec une lumière ultraviolette ou un rayonnement de haute énergie suffisant pour provoquer une liaison de l'organopolysiloxane au support polymérique, mais sans modifier notablement les valeurs de pénétration de cône et d'allongement à la rupture de l'organopolysiloxane.

**6.** Procédé suivant la revendication 5, dans lequel l'huile d'organopolysiloxane non réticulé est présente en une quantité de 25% à 75%.

**7.** Procédé suivant la revendication 5 ou 6, dans lequel l'organopolysiloxane consiste en un polydiméthylsiloxane, une quantité allant jusqu'à 5% du polydiméthylsiloxane étant terminée par des groupes divinylméthylsiloxane.

**8.** Procédé suivant la revendication 5, 6 ou 7, dans lequel l'irradiation est effectuée au moyen de lumière ultraviolette ou d'un faisceau d'électrons.

**9.** Article comprenant un support polymérique et, greffé sur ce support, un mélange d'un organopolysiloxane réticulé et de 10 à 90% en poids d'huile d'organopolysiloxane non réticulé, mélange qui possède une valeur de pénétration de cône de 100 à 350 ($10^{-1}$ mm) et un allongement à la rupture d'au moins 100%.

**10.** Article suivant la revendication 9, dans lequel l'huile d'organopolysiloxane non réticulé est présente en une quantité de 25% à 75%.

11. Article suivant la revendication 9 ou 10, dans lequel l'organopolysiloxane consiste en un polydiméthylsiloxane et une quantité allant jusqu'à 5% du polydiméthylsiloxane est terminée par des groupes divinylméthylsiloxane.

12. Article suivant l'une quelconque des revendications 9 à 11, dans lequel l'irradiation est effectuée au moyen de lumière ultraviolette ou d'un faisceau d'électrons.

13. Article suivant l'une quelconque des revendications 9 à 12, qui est sous forme d'un ruban.